## Europäisches Patentamt

## European Patent Office

## Office européen des brevets

(19)

(11) **EP 1 688 710 A1**

(12) **EUROPÄISCHE PATENTANMELDUNG**

(43) Veröffentlichungstag:
**09.08.2006 Patentblatt 2006/32**

(51) Int Cl.:
*G01D 5/20* (2006.01)       *G01B 7/34* (2006.01)

(21) Anmeldenummer: **05405051.3**

(22) Anmeldetag: **02.02.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(71) Anmelder: **Pretec Gmbh
2562 Port (CH)**

(72) Erfinder:
• **Ulbers, Gerd
3122 Kehrsatz (CH)**

• **Martin, Gijs
1024 Ecublens (CH)**

(74) Vertreter: **Roshardt, Werner Alfred
Keller & Partner
Patentanwälte AG
Schmiedenplatz 5
Postfach
3000 Bern 7 (CH)**

(54) **Verfahren zur Ermittlung eines Verschiebewegs mit einem induktiven Wegaufnehmer sowie der Wegaufnehmer selbst**

(57)     Bei dem Verfahren zur Ermittlung einer Messweglänge ($\pm\,\Delta$**d**) wird eine Induktivitätsänderung wenigstens einer ein Magnetfeld erzeugenden Erregerspule (**Er**) ermittelt. Das Magnetfeld wird in einem ferromagnetischen Joch (**J**) und einem ferromagnetischen Tauchkern (**Tk**) geführt. Joch (**J**) und Tauchkern (**Tk**) werden relativ zueinander entlang der Messweglänge ($\pm\Delta$**d**) verschoben, wobei die Verschiebung lediglich entlang von sich während der Messung nicht ändernden Verschiebespielpassungen erfolgt. Ein über das Joch und den Tauchkern geschlossener ferromagnetischer Feldlinienweg des Magnetfeldes wird lediglich durch die konstanten, kleinen Luftspalte (**S1, S2**) unterbrochen. Eine Änderung eines magnetischen Widerstands jetzt nur noch im ferromagnetischen Kreises bewirkt entsprechend der Messweglänge ($\pm$ **Od**) die Induktivitätsänderung der Erregerspule.

Fig. 1

**Beschreibung**

**Technisches Gebiet**

Die Erfindung betrifft ein Verfahren zur Ermittlung einer Messweglänge mit einem induktiven Wegaufnehmer sowie einem hierzu verwendbaren Wegaufnehmer. Der Wegaufnehmer hat wenigstens eine ein Magnetfeld erzeugende Erregerspule sowie ein Joch und einen Tauchkern, welche das Magnetfeld führen und relativ zueinander entlang der Messweglänge verschiebbar sind.

**Stand der Technik**

In der deutschen Offenlegungsschrift DE-A 37 22 702 ist ein induktiver Wegaufnehmer mit einem Tauchkern (auch Tauchanker genannt) beschrieben. Dieser Tauchkern wurde entsprechend einem Messweg (Strecke) in eine ringförmige Spule eingeschoben, wobei die Spule in einem Topf aus einem paramagnetischen Material angeordnet sein konnte. Die DE-A 37 22 702 versuchte die Aufgabe zu lösen, eine annähernd lineare Abhängigkeit bzw. eine Abhängigkeit mit einer definiert gekrümmten Kurve zwischen einem Messweg (Lufteinschiebeweg in die Spule) und einer resultierenden Induktivität der Spule zu erhalten. Hierzu wurde am Spulenende, also am der der Einschiebeöffnung für den Tauchkern in die Spule gegenüberliegenden Ende einen plattenförmigen Spulenabschlussteil aus einem magnetisch permeablen Material angeordnet. Die genaue Einstellung des Spulenabschlussteils auf einen gewünschten Kurvenverlauf erfolgt durch eine Veränderung des Abstands dieses Spulenabschlussteiles zum Spulenende.

In der EP 0 635 696 wie auch in der US 3,750,294 ist ein weiterer induktiver Wegaufnehmer beschrieben. Der hier beschriebene Wegaufnehmer diente zum Messen von Dicken dünner Papierbahnen oder -bögen sowie von Folien, wobei auch hier versucht wurde, eine lineare Kennlinie zu erreichen. Der Wegaufnehmer hatte ein im wesentlichen zylindrisches Gehäuse, welches eine zylindrische Spule aufnahm. Ein ebenfalls zylindrischer ferromagnetischer Tauchkern als Tastorgan wurde entsprechend dem zu bestimmenden Weg entgegen der Kraft einer Druckfeder in das Gehäuse eingeschoben. Auch hier wurde ein freier, vom Magnetfeld durchflossener Zwischenraum in seiner Länge, um eine Änderung der Spuleninduktivität zu erreichen, verändert. Um eine möglichst lineare Änderung der Induktivität der Spule zu erhalten, hatte bei der EP 0 635 696 die der Spule zugewandte Stirnseite des Tauchkerns eine Ausnehmung in Form eines Rotationsparaboloiden, die US 3,750 294 hatte hingegen eine zur Bewegungsrichtung senkrechte Endfläche.

In der DE 25 11 683 ist ein weiterer induktiver Wegaufnehmer beschrieben. Bei dem hier beschriebenen Wegaufnehmer war ein ferromagnetischer Kern zwischen einer mit Wechselstrom gespeisten Primärwicklung und mindestens einer Sekundärwicklung beweglich angeordnet. Sekundärseitig war eine Spannung abgreifbar, deren Wert der jeweiligen Stellung des Kerns entsprach. Der Kern war jochartig ausgebildet, um dessen Jochbogen die Primärwicklung griff, wobei die Primärwicklung als ortsfeste Schlaufe ausgebildet war, in der sich der Jochbogen bewegte. Die Wicklungsform der Sekundärwicklung war als Rechteckteil mit aufgesetztem Dreieckteil ausgebildet, wobei mehrere Wicklungen mit jeweils verlängertem Rechteckteil übereinander angeordnet waren; hierdurch sollte ein homogenes, sich mit der Stellung des Kerns veränderndes Magnetfeld erreicht werden.

**Darstellung der Erfindung**

**Aufgabe**

Aufgabe der Erfindung ist es, ein Verfahren zur Ermittlung einer Messweglänge mit einem induktiven Wegaufnehmer vorzustellen sowie einen hierfür verwendbaren induktiven Wegaufnehmer zu schaffen, wobei eine Induktivitätsänderung in einer Erregerspule des Wegaufnehmers als Messwert für die Wegänderung über den auszumessenden Wegbereich direkt umgekehrt proportional verlaufen soll.

**Lösung**

Die Lösung der Aufgabe erfolgt verfahrensmässig durch die Merkmale des Patentanspruchs 1 sowie vorrichtungsmässig durch die Merkmale des Patentanspruchs 3.

Kern der Erfindung ist es, eine Induktivitätsänderung in wenigstens einer Erregerspule zu erreichen, welche lediglich auf einer Änderung eines magnetischen Widerstands in ferromagnetischen Bauelementen fusst, wobei die Änderung dieses ferromagnetischen Widerstands proportional zu $\pm\,2\Delta d$ erfolgt und $\Delta d$ der ausgemessene Weg (=Messweg) ist.

Das Verschieben der beiden Bauteile erfolgt nun derart, dass die für das Verschieben vorhandenen Verschiebeöffnungen gleich breit gehalten werden. Der Ausdruck "gleich breit" ist derart zu verstehen, dass die Länge der magnetischen Feldlinien in den Verschiebeöffnungen (= Luftspalte) gleich bleibt. Vorzugsweise wird man die Verschiebeöffnungen mit einer schmalen Breite als Verschiebespielpassungen ausführen; man muss es aber nicht. Spielpassungen sind in der DIN 7150 definiert.

Das magnetische Feld der wenigstens einen Erregerspule wird über einen ferromagnetischen Feldlinienweg in einem Joch und einem Tauchkern geführt; wobei lediglich vorzugsweise ein sehr kleiner Weg des Magnetfeldes in den Luftspalten der Verschiebeöffnungen geführt ist. Dieser Luftweg wird zudem über dem gesamten Messweg bis auf Herstellungstoleranzen im Gegensatz zu bekannten induktiven Wegaufnehmer des Stands der Technik konstant und vorzugsweise klein gehalten. Der sich mit der Messwegänderung ändernde Induktivitätswert der Erregerspule ist klein, da lediglich die Feldlinienlänge in den ferromagnetischen Teilen, jedoch nicht in den nicht-ferromagnetischen "Feldlinienwegen" geändert wird. Drastische Induktivitätsänderungen, wie bei den bekannten induktiven Wegaufnehmern als Funktion einer relativen Verschiebung zwischen Joch und Tauchkern ergeben sich nicht. Eine grosse Induktivität, wie bei der Erfindung, erzeugt ein hohes Sensorsignal; es wird ein hohes Signal zu Rauschverhältnis erreicht. Der bei der Erfindung verwendbare Messweg ist somit grösser als bei den bekannten Wegaufnehmern, welche den Messweg hauptsächlich nur im Luftweg der magnetischen Feldlinien verändern. Die Erfindung hingegen verändert den ferrromagnetischen Weg in Abhängigkeit vom Messweg.

Die nicht-ferromagnetischen "Feldlinienwege" befinden sich in der Regel in Luft. Die Verschiebeöffnungen könnten jedoch auch mit einer Flüssigkeit gefüllt sein, welche eine sich von Luft unterscheidende Permeabilität aufweisen kann.

Damit ein Verschieben (im Sonderfall ein Gleiten) in einer Spielpassung möglich ist, müssen die aufeinander gleitenden Flächen des Jochs und des Tauchkerns Geraden aufweisen, welche parallel zur Verschieberichtung liegen. Senkrecht zur Verschieberichtung können einander gegenüberliegende Flächen der Verschiebespielpassung (Spaltflächen, Gleitflächen) beliebig geformt sein, einander zugeordnete Flächen müssen jedoch eine gleiche Form (Profil) haben.

Im einfachsten Fall können es zueinander und zur Verschieberichtung parallele Flächen sein. Es können auch entsprechend der Spielpassung benachbarte gewölbte Flächen mit gleichem Zentrum sein, usw.

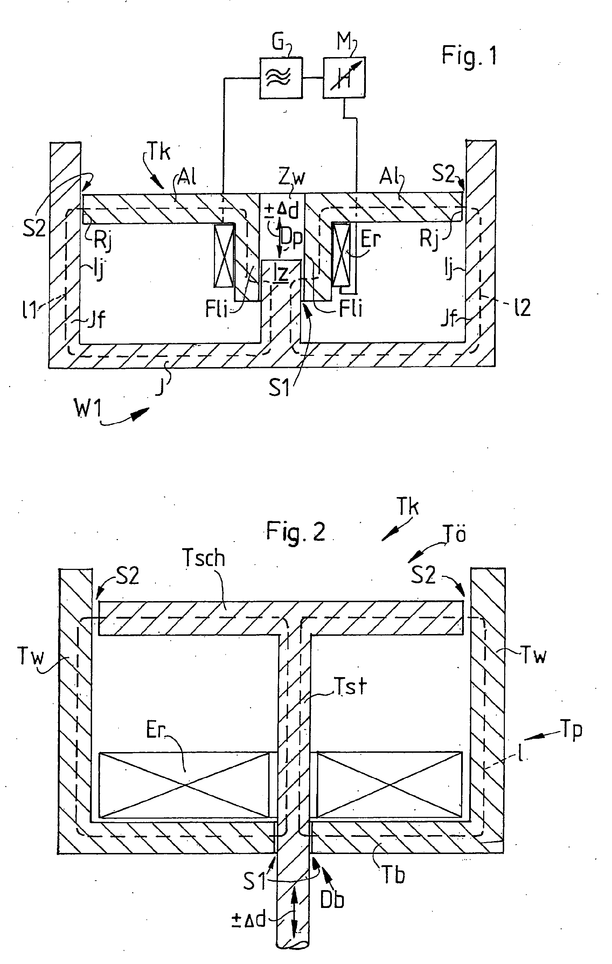

Ein prinzipieller Aufbau eines erfindungsgemässen induktiven Wegaufnehmers **W** zeigt **Figur 1.** Hier ist ein ferromagnetisches Joch **J** und ein ferromagnetischer Tauchkern **Tk** vorhanden. Joch **J** und Tauchkern **Tk** sind relativ gegeneinander gemäss Doppelpfeil **Dp** verschiebbar. Der Tauchkern **Tk** hat zwei mit einem Zwischenraum **Zw** voneinander distanzierte Innenflansche **Fli,** um die die Windungen einer Erregerspule **Er** gewickelt sind. Die Erregerspule **Er** wird von einem von einem Frequenzgenerator **G** gelieferten Strom durchflossen. Die Spuleninduktivität **L,** welche sich durch das Ineinanderschieben und Auseinanderzeihen um die Messweglänge von Joch J und Tauchkern **Tk** ändert, wird mit einem Messgerät **M** ermittelt. Die den Zwischenraum **Zw** bildenden Zwischenraumwände der Innenflansche **Fli** sind parallel zur Verschieberichtung **Dp.** Ferner hat der Tauchkern **Tk** zwei Ausleger **Al**. Das Joch **J** hat einen Innenzapfen **Iz**, dessen Innenzapfenaussenwände parallel zu den Zwischenraumwänden sind. Der Abstand der Zwischenraumwände zu den Innenzapfenaussenwänden entspricht einer ersten Spielpassung **S1**, wodurch eine gleitende Verschiebung in Richtung Doppelpfeil **Dp** möglich ist. Die Enden der Ausleger **Al** haben Randflächen **Rj,** welche ebenfalls parallel zur Verschieberichtung **Dp** und parallel zu den Innenwänden **Ij** der nach oben stehenden Jochflansche **Jf** sind. Die Randflächen **Rj** und die Innenwände **Ij** gleiten ebenfalls in einer Spielpassung **S2**. Die Magnetfeldlinien des von der Erregerspule **Er** erzeugten Magnetfeldes werden durch die Linien $\ell 1$ und $\ell 2$ symbolisiert. Die Magnetfeldlinien $\ell 1$ und $\ell 2$ verlaufen nun bis auf die durch die Spielpassungen **S1** und **S2** gebildeten Luftspalte **S1** und **S2** ausschliesslich in ferromagnetischem Material. Werden Joch **J** und Tauchkern **Tk** gegeneinander verschoben, so vergrössert oder verkleinert sich die Länge der Magnetfeldlinien $\ell 1$ und $\ell 2.$ Ein vollständig in das Joch **J** eingeschobener Tauchkern **Tk** ist gestrichelt angedeutet. Aus dieser Darstellung (gestrichelt) ist auch ersichtlich, dass weder im gesamten Joch bzw. noch im gesamten Tauchkern die magnetischen Feldlinien verlaufen müssen. Im vollkommen zusammengeschobenen Zustand verlaufen die magnetischen Feldlinien nur in einem Teilbereich des Tauchkerns **Tk**.

Da der Feldlinienweg, wie unten ausgeführt wird, linear in den magnetischen Widerstand $R_m$ eingeht und die Luftspalte der Spielpassungen **S1** und **S2** in erster Näherung konstant bleiben, ändert sich auch der gesamte magnetische Widerstand $R_m$ linear mit einer Änderung der Messweglänge $\Delta$**d.**

Wie nun Tauchkern **Tk** und Joch J im Einzelnen ausgestaltet werden, ist nahezu gleichgültig. Es ist z.B. nicht von prinzipieller Bedeutung, ob das Joch aus Platten gebildet ist oder als Topf. Ein Topf ergibt allerdings einen störungssicheren Aufbau, da die Spielpassungen z.B. leicht gegen Verschmutzen geschützt werden können. Es ist lediglich darauf zu achten, dass die magnetischen Feldlinien auf ihrem Weg möglichst wenig Luftspalte, welche für eine relative Verschiebung von Tauchkern und Joch notwendig sind, überqueren müssen (jeweils zwei Luftspalte sind ausreichend). Die Breite der Luftspalte ist vorzugsweise so klein wie möglich zu halten, wobei jedoch ein einwandfreies, reibungsvermindertes gegeneinander Verschieben von Joch J und Tauchkern **Tk** gegeben sein muss. Dieser nahezu ideale Luftspalt ist durch eine Spielpassung gegeben, wie sie beispielsweise in der DIN 7150 definiert ist.

Die Induktivität der Erregerspule wird mittels einer Impedanzmessung bestimmt.

Gemäss Meinke/Gundlach, Taschenbuch der Hochfrequenztechnik , Springer-Verlag 1962, Seite 3 ff hat eine Spule mit einem ferromagnetischen Kern einen komplexen Widerstand $\underline{Z}$ von

$$\underline{Z} = R_W + R_R + j\omega L_R$$

$R_W$ ist der Wicklungswiderstand der Spule. $R_R$ ist der durch den Kern verursachte Wirkwiderstand und $L_R$ die Induktivität der Spule. $\omega L_R$ wird als induktiver Widerstand **X** bezeichnet.

Der induktive Widerstand $X_L$ einer Spule mit der Windungszahl **w** und einem ferromagnetischen Kern ergibt sich bei einer Frequenz f des durch die Spule fliessenden Stromes zu

$$X_L = \omega \cdot w^2 \cdot \mu \cdot (q_K/\ell) \text{ mit } \omega = 2 \cdot \pi \cdot f.$$

In dieser vereinfachten Formel wird davon ausgegangen, dass der ferromagnetische Kern homogene Kerneigenschaften mit einer Permeabilität $\mu$ ($\mu = \mu_0 \cdot \mu_r$) aufweist, die magnetischen Feldlinien im Kern die Feldlinienlänge $\ell$ haben, der Kern einen konstanten Querschnitt und damit die Feldlinien einen konstanten Flussquerschnitt $q_K$ haben.

Diese vereinfachte Darstellung ist jedoch bei der Erfindung nur in einer Abwandlung verwendbar. In der nachfolgenden Beschreibung ist das Joch **J** in einer in **Figur 2** schematisch dargestellten Ausführungsvariante als kreiszylindrischer Topf **Tp** und der Tauchkern **Tk** als Tauchkernstab **Tst** mit einer Tauchkernscheibe **Tsch** ausgebildet. Topfwand **Tw,** Topfboden **Tb,** die einen magnetischen Feldlinienweg in der Topföffnung **Tö** schliessende Tauchkernscheibe **Tsch** und der durch die Erregerspule **Er** greifende Tauchkernstab Tst haben einen unterschiedlichen, die Magnetfeldlinien aufnehmenden Querschnitt $q_{KW}$, $q_{KB}$, $q_{KSch}$ und $q_{KSt}$. Auch können Tauchkern **Tk** und Topf **Tp** aus unterschiedlichen Materialien bestehen, d.h. sie können eine unterschiedliche Permeabilität haben und auch unterschiedliche Verluste (beispielsweise durch Wirbelströme hervorgerufen) aufweisen. In einer Analogie zum Ohmschen Gesetz kann hier mit einem magnetischen Widerstand $R_m$ gerechnet werden. Unter einer vereinfachenden Annahme eines jeweiligen Kernbereichs mit konstantem Kernquerschnitt $q_K$ und einer Feldlinienlänge $\ell$ der Magnetfeldlinien, ergibt sich dann ein komplexer magnetischer Widerstand $\underline{R}_m = \ell/(\mu \cdot q_K)$, wobei $\underline{\mu} = \mu' - j\,\mu'')$ eine komplexe Permeabilität bezeichnet, bei der der Imaginärteil massgeblich für die Verluste ist.

Es ergibt sich somit ein komplexer induktiver Widerstand zu

$$\underline{X_L} = \omega \cdot w^2 / \underline{R_m}$$

sowie

$$\underline{Z} = R_W + j\,\underline{X_L},$$

wobei in der Regel der Windungswiderstand $R_W$ gegenüber dem induktiven Widerstand $X_L$ vernachlässigbar ist.

Eine Ausführung eines erfindungsgemässen induktiven Wegaufnehmers W2 kann nun, gemäss der Skizze in **Figur 2,** einen Topf **Tp** aus einem ferromagnetischen Material, in dem eine Erregerspule **Er** angeordnet ist und in dem ein ferromagnetischer Tauchkern **Tk** entsprechend des zu messenden Weges bewegbar ist, haben. Der Tauchkern **Tk** hat einen stabförmigen Tauchkernstab **Tst** und eine auf den Tauchkernstab **Tst** angeordnete Tauchkernscheibe **Tsch.** Der Tauchkernstab **Tst** greift durch einen Durchbruch **Db** im Topfboden **Tb.**

Ein gesamter magnetischer Widerstand $\underline{R}_m$ setzt sich nun wie folgt zusammen:

- ein konstanter magnetischer Widerstand $\underline{R}_{m,Luftspalt}$ hervorgerufen von einem Luftspalt **S1** zwischen dem Tauchkernstabmantel und der Innenwand des Durchbruchs **Db** im Topfboden **Tb** und einem Luftspalt **S2** zwischen der Tauchkernscheibenaussenkante und der Innenkontur der Topfes **Tp,**

- ein konstanter magnetischer Widerstand $\underline{R}_{m,Scheibe}$ hervorgerufen durch die Tauchkernscheibe **Tsch,**

- ein magnetischer Widerstand $\underline{R}_{m,Stab}$ hervorgerufen durch den Tauchkernstab **Tst** zwischen dem Topfboden und der Tauchkernscheibe,

- ein konstanter magnetischer Widerstand $\underline{R}_{m,Topfboden}$ hervorgerufen durch den Topfboden **Tb,**

- ein magnetischer Widerstand $\underline{R}_{m,Topfwand}$ bis zur Lage der Tauchkernscheibe **Tsch** in Ruheposition.

Wird nun der **T**auchkern **Tk** im Topf **Tp** bewegt, so bleiben $\underline{R}_{m,Luft}$, $\underline{R}_{m,Scheibe}$ und $\underline{R}_{m,Topfboden}$ konstant, lediglich $\underline{R}_{m,Stab}$ und $\underline{R}_{m,Topfwand}$ vergrössern oder verkleinern sich linear, je nachdem, ob die dortigen magnetischen Feldlinien $\ell$ verlängert oder verkürzt werden. Die Linearität ergibt sich, da keine Querschnittsveränderung von $q_{KW}$ und $q_{KSt}$ erfolgt.

Es ergibt sich somit ein magnetischer Widerstand $R_{m,Ruhe}$ für eine Ruhelage des Tauchkerns **Tk** zu

$$\underline{R}_{m,Ruhe} = \underline{R}_{m,Luftspalt} + \underline{R}_{m,Scheibe} + \underline{R}_{m,Topfboden} + \underline{R}_{m,Stab} + \underline{R}_{m,Topfwand}$$

Erfolgt nun eine Bewegung des Tauchkerns **Tk,** so ändert sich der magnetische Widerstand für die Ruhelage um einen Bewegungsterm des magnetischen Widerstands von $\pm$ $\underline{R}_{m,Bewegung}$ je nach Bewegungsrichtung, wobei

$$\underline{R}_{m,Bewegung} = \pm \Delta d \cdot \{[1/ (\mu_{Stab} \cdot q_{K,Stab})] + [1/ (\mu_{Topf} \cdot q_{K,Topfwand})]\}.$$

$\pm \Delta d$ ist die zu bestimmende Messweglänge, welche einer Verlängerung bzw. Verkürzung der magnetischen Feldlinienlänge $\ell$ im Topf **Tp** und im Tauchkernstab **Tk** entspricht.

Da sich entsprechend $\pm$ $\underline{R}_{m,Bewegung}$ der magnetische Fluss bei gleicher Erregung der Erregerspule **Er** ändert, erfolgt auch eine geringe Änderung der Feldlinienverteilung in den Luftspalten (Spielpassungen **S1** und **S2**). Streng genommen würde sich somit auch der magnetische Widerstand der Luftspalte $\underline{R}_{m,Luftspalt}$ ändern. Da aber eine Änderung des gesamten magnetischen Widerstands gering ist, kann diese Änderung vernachlässigt werden. Der gesamte magnetische Widerstand $R_{m,Ruhe}$ $\pm$ $\underline{R}_{m,Bewegung}$ ändert sich somit linear mit $\pm \Delta$**d**.

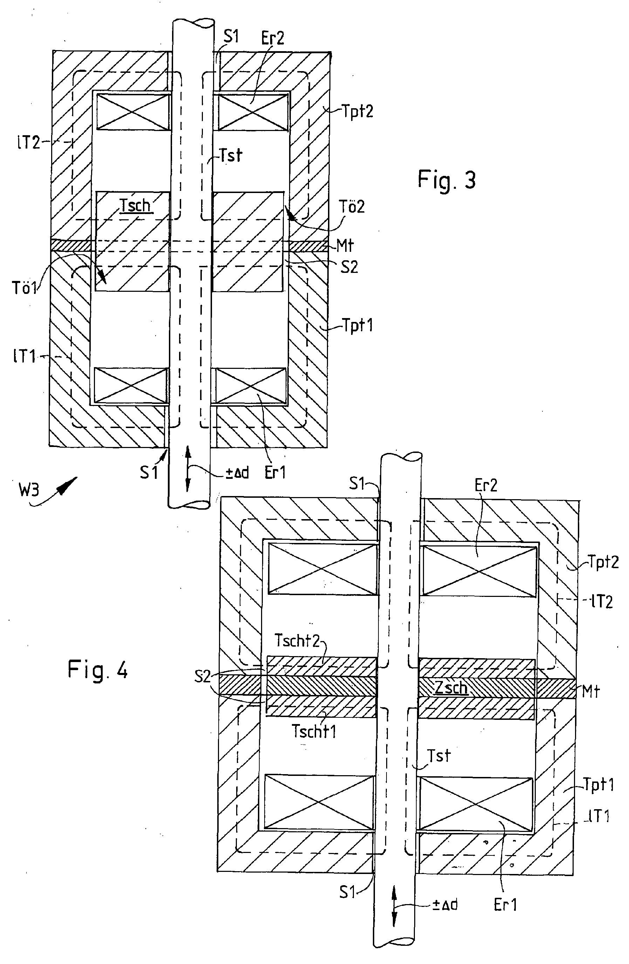

Ein induktiver Wegaufnehmer kann nun mit einem einzigen Topf **Tp,** wie schematisch in **Figur** 2 gezeigt (Wegaufnehmer **W2**), ausgebildet werden, indem die oben angeführte Tauchkernscheibe **Tsch** entsprechend dem zu messenden Weg hin und her bewegt wird. Man kann nun aber auch, wie in **Figur 3** (Wegaufnehmer **W3**) dargestellt, den Topf in zwei Teiltöpfe **Tpt1** und **Tpt2** teilen und in jedem Teiltopf **Tpt1** und **Tpt2** eine Erregerspule **Er1** und **Er2** anordnen. Die beiden Teiltöpfe **Tpt1** und **Tpt2** wird man dann mit den Topföffnungen **Tö1** und **Tö2** gegeneinander anordnen, wobei die Scheibe **Tsch** in ihrer Ruhelage dann mittig zu den Topföffnungsrändern liegt. Beide Teiltöpfe **Tpt1** und **Tpt2** wird man vorzugsweise identisch ausbilden und sie miteinander fluchtend, in spiegelbildlicher Lage zueinander anordnen. Der Tauchkernstab **Tst** greift dann durch beide Böden **Tb1** und **Tb2** Teiltöpfe **Tpt1** und **Tpt2** hindurch. Um die beiden Magnetkreise voneinander zu trennen, welche symbolisch durch die beiden Feldlinien $\ell$**T1** und $\ell$**T2** angedeutet sind, wird man eine magnetische Trennung **Mt** zwischen den beiden Topföffnungsrändern vornehmen. Die Trennung erfolgt durch ein Gebiet mit einem magnetischen Widerstand $R_{m, isolier}$ der grösser ist als der magnetische Gesamtwiderstand im Magnetkreis zur betreffenden Erregerspule **Er1** bzw. **Er2.** Der isolierende magnetische Widerstand $R_{m, isolier}$ sollte mindestens zehn Mal grösser sein als der magnetische Gesamtwiderstand. Diese Trennung kann durch einen Luftspalt erfolgen. Man wird sie jedoch aufgrund einer einfacheren Konstruktion und einer grösseren mechanischen Stabilität wegen mit einem Kunststoffring vornehmen.

Bei einer Verwendung von zwei Erregerspulen **Er1** und **Er2** und voneinander getrennten Teiltöpfen **Tpt1** und **Tpt2** kann die elektronische Auswertung der Erregerspulenimpedanzen über eine Brückenschaltung oder einen Differenzverstärker erfolgen.

Als ferromagnetische Materialien für den Tauchkern und den Topf sollten Materialien verwendet werden, welche möglichst kleine Ummagnetisierungsverluste aufweisen. Je nach verwendeter Frequenz sind auch Wirbelstromverluste zu beachten. Je höher die Frequenz des Stromes in der Erregerspule ist, desto grösser sind die Wirbelstromverluste in einem elektrisch leitenden ferromagnetischen Material. Man wird deshalb vorzugsweise elektrisch nicht leitende Ferrite nehmen, welche jedoch den Nachteil einer schlechten mechanischen Bearbeitbarkeit zeigen.

Vorzugsweise wird man zur Trennung der von den Erregerspulen **Er1** und **Er2** erzeugten Magnetkreise nicht nur den Topf in zwei Teiltöpfe unterteilen, sondern auch die Tauchkernscheibe in zwei Teilscheiben, wie schematisch in **Figur 4** (Wegaufnehmer **W4**) gezeigt ist. Die Teilscheiben **Tscht1** und **Tscht2** kann man dann, wie auch die Teiltöpfe **Tpt1** und **Tpt2,** magnetisch voneinander trennen. Auch wird man der einfacheren und stabileren Konstruktion wegen eine magnetisch isolierende Zwischenscheibe **Zsch** verwenden. D.h. der magnetische Widerstand der Zwischenscheibe Zsch sollte wenigstens zehn Mal grösser sein als derjenige der ferromagnetischen Teilscheiben **Tscht1** bzw. **Tscht2.** Die Zwischenscheibe **Zsch** wird man vorzugsweise auch wie einen Ring **Mt** zwischen den beiden Teiltöpfen **Tpt1** und **Tpt2** so dick ausbilden, wie die grösste Messweglänge ist, wobei gleich grosse Messwege um diese Ruhelage herum vorgesehen sind. Es kann auch der Tauchkernstab **Tst** zur Erhöhung einer magnetischen Trennung der beiden Magnetkreise fluchtend zur Zwischenscheibe **Zsch** magnetisch isolierend getrennt werden.

In Analogie zu den **Figuren 3** und **4** kann eine magnetische Isolierung der beiden durch die Erregerspule **Er1** und **Er2** erzeugten Magnetfelder auch bei einem ungeteilten Joch **Ju,** wie in **Figur 5** dargestellt, erfolgen. In diesem Fall wird man vorzugsweise die Tauchkernscheibe mit den beiden Teilscheiben **Tsch1** und **Tsch2** durch eine magnetisch isolierende Zwischenschicht **Zsch** und den Tauchkernstab in zwei Teiltauchkernstäbe **Tst1** und **Tst2** magnetisch getrennt durch eine Tauchkernstabzwischenscheibe **Tstz** aufbauen.

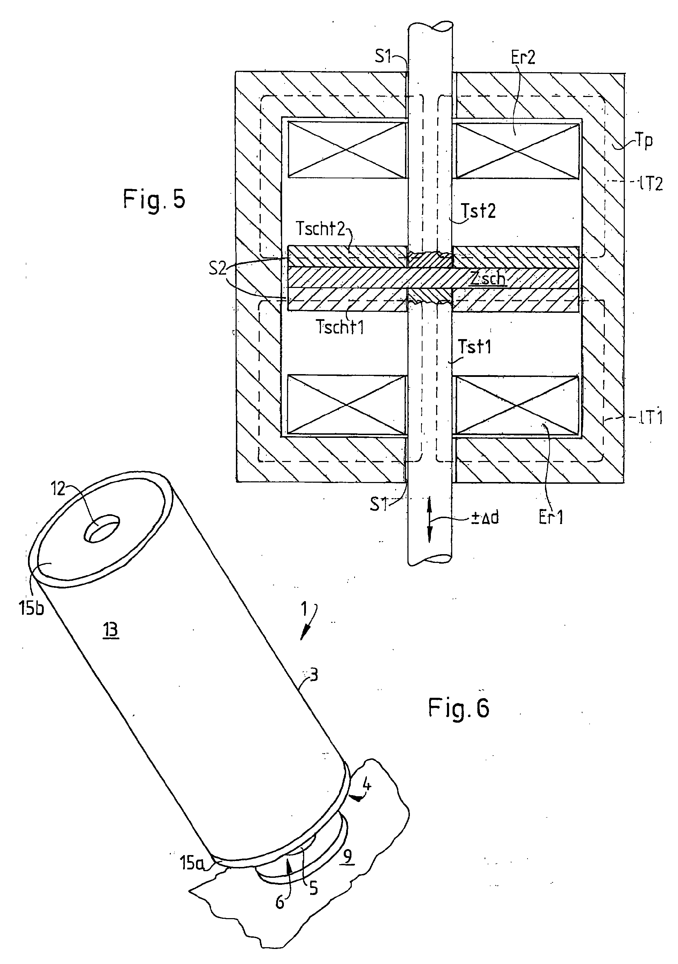

Konstruktiv lässt sich die Eliminierung des in **Figur 4** verwendeten Rings **Mt,** dadurch in **Figur 5** bewerkstelligen, dass beispielsweise die beiden Teiltöpfe **Tpat1** und **Tpt2** der **Figur 4** an ihren Stirnseiten **St1** und **St2** gegeneinander mit einer (nicht dargestellten) Verspannung zusammen gepresst werden. Anstelle von flachen Stirnflächen **St1** und **St2** in **Figur 4,** könnten die beiden Teiltöpfe **Tpat1** und **Tpt2** im Bereich ihrer Stirnflächen Gewinde aufweisen und ineinander geschraubt werden, wodurch eine magnetische Teilung aufgehoben wäre.

Wie gerade ausgeführt, wird man eine mittige Ruhelage wählen, muss aber nicht. Es kann auch ein Messweg in nur einer Richtung vorgesehen werden, wobei dann der Tauchkern in einer herausgefahrenen Stellung gehalten wird.

Wird eine Messwegaufnahme um eine Mittelstellung herum vorgesehen, lässt sich der Tauchkern vorzugsweise an einer raumsparenden Spiralfeder aufhängen.

Jede Erregerspule muss mit einem HF-Strom versorgt werden; die HF-Ströme müssen nicht gleich in der Stromstärke und auch nicht gleich in der Frequenz sein. Um eine raumsparende Ausgestaltung des Wegaufnehmers zu erreichen, sind vorzugsweise die Stromzuführungen in einer in der Aussenwand des Topfes angeordneten Ausnehmung führbar. Über die gesamte Anordnung kann dann noch eine Schutzhülse geschoben werden.

Für eine bevorzugt robuste Ausführung des Wegaufnehmers kann ausserhalb des Topfbodens, dem Messobjekt zugewandt, eine Führungsscheibe mit einem Durchbruch für den Tauchkernstab angeordnet werden. Werden zwei Teiltöpfe verwendet, kann auch ausserhalb beider Topfböden eine Führungsscheibe angeordnet werden.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung der Ausführungsbeispiele verwendeten Zeichnungen zeigen

Fig. 1    einen prinzipiellen Aufbau des erfindungsgemässen induktiven Wegaufnehmers,

Fig. 2    einen weiteren prinzipiellen Aufbau, wobei das in **Figur 1** dargestellte Joch **J** als kreiszylindrischer Topf **Tp** und der Tauchkern **Tk** als Tauchkernstab **Tst** mit einer Tauchkernscheibe **Tsch** ausgebildet sind,

Fig. 3    ein prinzipieller Aufbau als eine Variante zu dem in **Figur 2** dargestellten Wegaufnehmer mit einem in zwei Teiltöpfe aufgeteilten Topf,

Fig. 4    ein prinzipieller Aufbau als eine Varainte zu dem in **Figur 3** dargestellten Wegaufnehmer mit einer zweigeteilten Scheibe des Tauchkerns,

Fig. 5    ein prinzipieller Aufbau als Variante zu dem in **Figur 4** dargestellten Wegaufnehmer mit magnetisch einteiligem Topf,

Fig. 6    eine Draufsicht in Parallelperspektive auf eine Ausführungsvariante des erfindungsgemässen induktiven Wegaufnehmers,

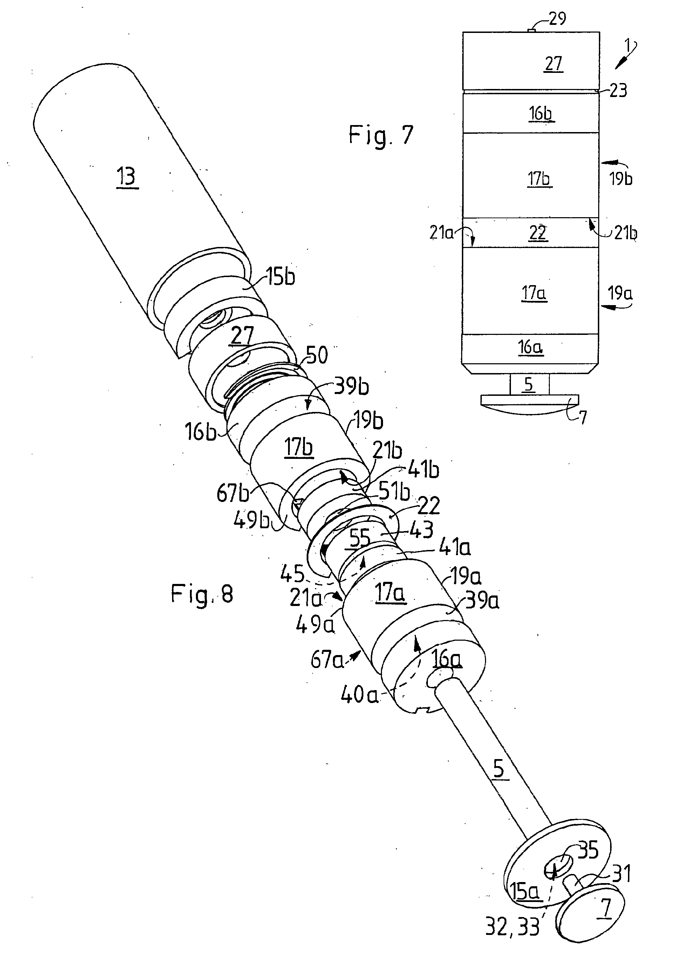

Fig. 7    eine zu **Figur 6** analoge Darstellung des dortigen Wegaufnehmers mit abgenommener Schutzabdeckung, wobei der konstruktive Aufbau der Prinzipskizze in **Figur 3** entspricht,

Fig. 8    eine parallelperspektivische Explosionsdarstellung des in **Figur 6** dargestellten Wegaufnehmers,

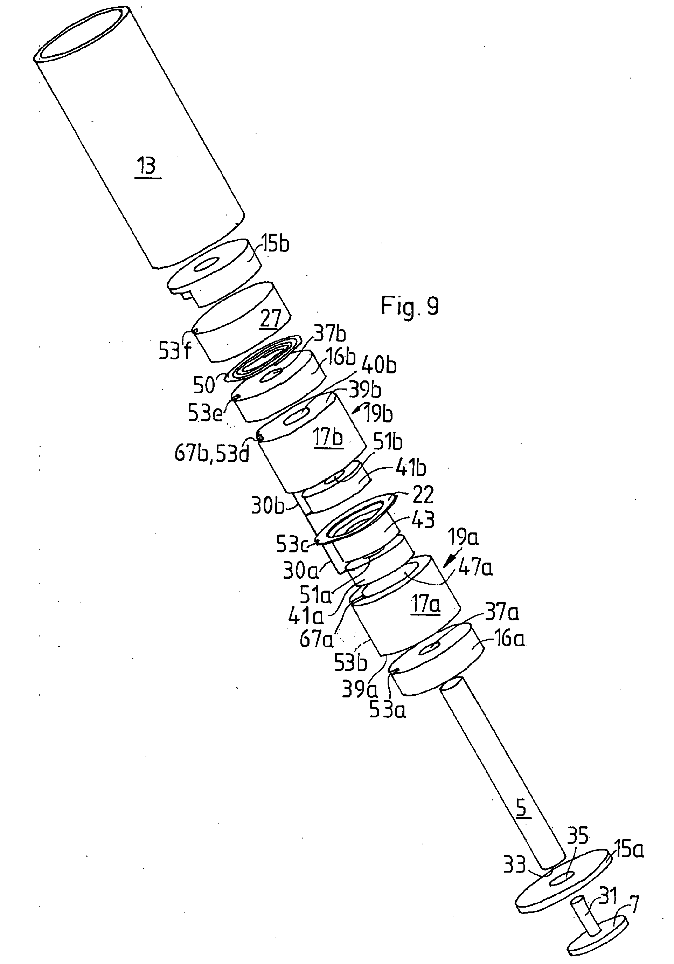

Fig. 9    eine zu **Figur 8** analoge Explosionsdarstellung, wobei jedoch gegenüber der Darstellung in **Figur 8,** welche eine Darstellung unter einem Blickwinkel schräg von unten zeigt, mit einer Darstellung unter einem Blickwinkel schräg von oben und

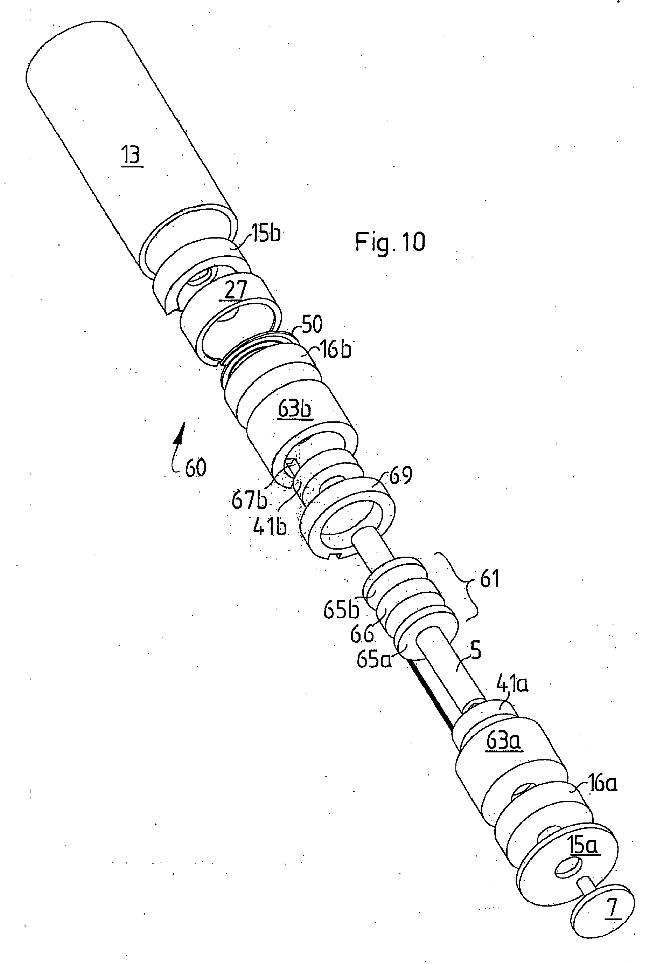

Fig. 10   eine Ausführungsvariante eines induktiven Wegaufnehmers, analog zu der in **Figur 4** dargestellten Prinzipskizze.

Grundsätzlich sind in den Figuren gleiche Teile und Elemente mit gleichen Bezugszeichen versehen.

## Wege zur Ausführung der Erfindung

Der in **Figur 6** dargestellte induktive Wegaufnehmer **1** als beispielsweise Ausführungsvariante der Erfindung ist als Kreiszylinder **3** ausgebildet, an dessen einen Stirnseite **4** ein Tauchkernstab **5** eines ferromagnetischen Tauchkerns **6** mit einem Tastkörper **7** zur Auflage auf einer höhen- und tiefenmässig auszumessenden Objektoberseite **9** herausragt. Eine am der Stirnseite **4** abgewandten Ende des Zylinders **3** ausgebildete Stirnseite **11** hat einen nicht näher dargestellten Durchbruch **12,** durch den elektrische Signalleitungen nach aussen führbar sind und der zur Befestigung des Wegaufnehmers **1** an einer nicht dargestellten Halterung verwendbar ist.

**Figur 7** zeigt den in **Figur 6** dargestellten induktiven Wegaufnehmer **1** mit abgenommener Schutzverkleidung, welche aus einem Zylinderrohr **13** und je einer stirnseitigen Abdeckung **15a** und **15b** besteht. In **Figur 7** ist der bereits aus **Figur 6** bekannte Tauchkernstab **5** und der Tastkörper **7** zu sehen. In **Figur 7** ist ferner eine Führungsscheibe **16a,** hier vorzugsweise aus Teflon, zu sehen, durch die der Tauchkernstab **5** greift. Ferner zeigt **Figur 7** eine Aussenseite eines ferromagnetischen Topfes, in dem der Tauchkern **6** entsprechend einem auszumessenden Weg $\pm \Delta\ell$ verschiebbar ist. Der ferromagnetische Topf ist in zwei Teiltöpfe **19a** und **19b** aus Ferrit als ferromagnetisches Material unterteilt, von denen in **Figur 7** lediglich die Topfaussenwände **17a** und **17b zu** sehen sind. Beide Teiltöpfe **19a** und **19b** sind miteinander fluchtend, in spiegelbildlicher Lage angeordnet. Die Topföffnungen **21a** und **21b** sind gegeneinander gerichtet und voneinander durch eine magnetisch isolierende und vorzugsweise elektrisch isolierende Zwischenringscheibe **22** getrennt. Eine elektrische Isolierung ist nicht zwingend, da das Magnetfeld in der Zwischenringscheibe **22** klein ist und damit auch Wirbelströme klein sind. Eine weitere Führungsscheibe **16b** ist auf den hier nicht sichtbaren Topfboden des Teiltopfes **21b** angeordnet; auch durch diese Führungsscheibe **16b** greift (in **Figur 8** sichtbar) der Tauchkernstab **5.** Auf der Führungsscheibe **16b** sitzt durch einen kleinen Abstand **23** getrennt, der zur Befestigung einer in **Figur 7** sichtbaren Spiralfeder **25** dient, eine Kappe **27,** welche eine Kabelführung **29** für die elektrischen Zuleitungen **30a** und **30b** zur Erregerspule trägt.

**Figur 8** zeigt eine Explosionsdarstellung des in **Figur 6** dargestellten induktiven Wegaufnehmers **1.** Beginnend auf der linken Bildseite der **Figur 8** ist der Tastkörper **7** zu sehen, der mit seinem Schaft **31** in eine nicht sichtbare Sackbohrung **32** in der ebenfalls nicht sichtbaren Stirnseite **33** des Tauchkernstabes **5** befestigbar ist. In **Figur 8** folgt nach rechts die untere stirnseitige Abdeckung **15a** mit einem Durchbruch **35,** durch den der Tauchkernstab **5** greift. Als Nächstes folgt die Führungsscheibe **16a** ebenfalls mit einem Durchbruch **37a** für den Tauchkernstab **5** und dann der Teiltopf **19a** mit der Aussenseite **17a** und einem Teiltopfboden **39a,** der ebenfalls einen (hier nicht sichtbaren) Durchbruch **40a** für den Tauchkernstab **5** aufweist. Benachbart zur Teiltopföffnung **21a** ist eine Erregerspule **41a** angeordnet, welche im zusammengebauten Zustand innen auf dem Teiltopfboden **39a** aufliegt. In **Figur 8** anschliessend an die Erregerspule **41a** folgt eine Tauchkernscheibe **43** aus Ferrit. Die Tauchkernscheibe **43** hat eine (hier nicht sichtbare) Durchgangsbohrung **45,** in der der Tauchkernstab 5 fixierbar ist. Die Tauchkernscheibe **43** und der Tauchkernstab **5** bilden den Tauchkern **6.** Als Nächstes folgt die magnetisch isolierende Zwischenringscheibe **22,** die derart ausgebildet ist, dass sie stirnseitig auf den Rändern der Teiltopföffnungen **21a** und **21b** aufliegt. Weiter nach rechts folgt eine zweite Erregerspule **41b** und dann ein zweiter Teiltopf **19b** in einer zum Teiltopf **19a** spiegelbildlichen Lage. Teiltopf **19a** und Teiltopf **19b** sind identisch ausgebildet, wobei hier der die Erregerspule **41b** aufnehmende Innenraum **47b** des Teiltopfes **19b** sichtbar ist; auch ist der stirnseitige Rand **49b** der Teiltopföffnung **21b** sichtbar. Ein Boden **39b** des Teiltopfes **19b** hingegen ist nicht sichtbar, auch nicht ein Durchbruch **40b** im Boden **39b** für den Tauchkernstab **5.** Auf den Teiltopf **19b** folgt eine analog zur Führungsscheibe **16a** ausgebildete Führungsscheibe **16b.** An die Führungsscheibe **16b** anschliessend folgt eine Spiralfeder **50,** welche über den Tauchkernstab **5** den Tauchkern **6** in einer Ruhelage hält. Anschliessend ist die Kappe **27** und dann die stirnseitige Abdeckung **15b** dargestellt. Das Zylinderrohr **13** als Hülse bildet das rechtsseitige Ende der Explosionsdarstellung in **Figur 7,** wobei die Hülse **13,** wie in **Figur 6** dargestellt über die oben aufgeführten Elemente derart schiebbar ist, dass sich ein kompakter Aufbau ergibt und links nur noch ein Teil des Tauchkernstabes **5** mit dem Tastkörper **7** herausschaut.

Da die Explosionsdarstellung der **Figur 8** viele Einzelpositionen zeigt, welche teilweise durch anschliessende Elemente verdeckt werden, ist eine **Figur 9** beigefügt, welche eine Darstellung unter einem Blickwinkel schräg von unten ist, während **Figur 9** eine Darstellung unter einem Blickwinkel schräg von oben ist. In **Figur 9** ist jetzt gut die dem Tastkörper **7** zugewandte Stirnseite **33** des Tauchkernstabes 5, der Innenraum **47a** des Teiltopfes **19a,** ein Durchbruch **51a** bzw. **51b** in der Erregerspule **41a** bzw. **41b** für den Tauchkernstab **5,** ein Durchbruch **40b** im Boden **39b** des Teiltopfes **19b** sowie die elektrischen Zuleitungen **30a** und **30b** zu den Erregerspulen **41a** und **41b** erkennbar. Diese elektrischen Zuleitungen **30a** und **30b** können die Nuten **53b** bis **53f** eingelegt werden, welche sich in den Teiltopfaussenseiten **17a** und **17b,** der Zwischenringscheibe **22,** der Führungsscheibe **16b** und der Kappe **27** befinden. Die Nut **53a** in der Führungsscheibe **16a** wird nicht benötigt; sie ist jedoch vorhanden, damit die beiden Führungsscheiben **16a** und **16b** aus Kostengründen identisch gefertigt werden können. Damit die elektrischen Zuleitungen **30a** und **30b** von der Nut **53b** bzw. **53d** in der Teiltopfwand **17a** bzw. **17b** zu der im Innenraum **47a** bzw. **47b** liegenden Erregerspule **41a** bzw. **41b** geführt werden können, ist die jeweilige Nut **53a** bzw. **53b** ausgehend von der Teiltopföffnung **21a** bzw. **21b** bis zur Oberkante der Erregerspule **41a** bzw. **41b** als Schlitz **67a** bzw. **67b** ausgebildet.

Zur Erklärung sei darauf hingewiesen, dass die Scheibe **43** nicht am Ende des Tauchkernstabes **5,** sondern vom Ende distanziert angeordnet ist. Der Tauchkernstab 5 wird auf seinem gesamten Verschiebeweg entsprechend der Messweglänge ($\pm \Delta\ell$) in den Durchbrüchen **37a** und **37b** der Führungsscheiben **16a** und **16b** geführt. Die Tauchkernscheibe **43** ist auf dem Tauchkernstab **5** derart angeordnet, dass sie in der Ruheposition mittig zur Zwischenringscheibe **22** liegt.

Der Pfad der magnetischen Feldlinien der Erregerspule **41a** läuft somit über den Boden **39a** des Teiltopfes **19a,** dessen Topfwand **17a,** über den Luftspalt (Verschiebespielpassung) zur umlaufenden Randfläche **55** der Scheibe **43,** radial durch die Tauchkernscheibe **43,** durch den Tauchkernstab **5,** axial bis zum Boden **39a** und über einen weiteren Luftspalt (Verschiebespielpassung) dann wieder zum Boden **39a.** Für die Erregerspule **41b** gilt ein analoger Verlauf. Die Feldlinien der beiden Erregerspulen **41a** und **41b** laufen durch die Tauchkernscheibe **43.**

In **Figur 10** ist eine Variante eines induktiven Wegaufnehmers **60** zu dem in den **Figuren 6** bis **9** dargestellten Wegaufnehmer **1** gezeigt. Bauteile des Wegaufnehmers **60,** welche identisch mit denjenigen des Wegaufnehmers **1** sind, sind mit derselben Bezugszahl gekennzeichnet. Der Wegaufnehmer **60** unterscheidet sich jedoch vom Wegaufnehmer **1** durch die Ausbildung der auf dem Tauchstabkern **5** sitzenden Scheibe **61** und der Anordnung der beiden Teiltöpfe **63a** und **63b.** Die Scheibe **61** ist nun in zwei Teilscheiben **65a** und **65b** aufgeteilt, die durch eine magnetisch isolierende Trennscheibe **66** voneinander getrennt sind (siehe Prinzipskizze in **Figur 4**). Die beiden Teiltopföffnungen **21a** und **21b** sind auch hier durch eine magnetisch isolierende Zwischenringscheibe **69** getrennt. Die Dicke $d_Z$ der Zwischenringscheibe **69** ist bis auf eine Fertigungstoleranz halb so dick, wie die Dicke $d_T$ der Trennscheibe **66.**

$$d_T = 2 \cdot d_Z$$

Die Dicke $d_T$ der Trennscheibe **66** ist nun so gross gewählt wie die grösste vorgesehene Messweglänge ($2\ \Delta\ell_{max}$). Im Gegensatz zum Wegaufnehmer **1** verläuft nun das magnetische Feld der Erregerspule **41a** immer über die Teilscheibe **65a** und das magnetische Feld der Erregerspule **41b** immer über die Teilscheibe **65b.** Im Gegensatz zum Wegaufnehmer **1** werden beim Wegaufnehmer **60** die Längen der magnetischen Feldlinien nur in der Teiltopfwand **17a** und **17b** und im Tauchkernstab **5** variert. Beim Wegaufnehmer **1** erfolgte zusätzlich eine Querschnittsänderung beim Übergang von der Teiltopfwand **17a** bzw. **17b** zur Tauchkernscheibe **43.**

Es ist darauf zu achten, dass die Luftspalte so kleine wie möglich gemacht werden, aber so gross, dass ein einwandfreies Verschieben des Tauchkerns **5** möglich ist. Da die Luftspalte immer dort sind, wo Verschiebebewegungen auftreten, können die Luftspaltseitenflächen auch mit einem Gleitmittel, wie beispielsweise Teflon belegt sein. Es kann somit auch der Innenraum **47a** und **47b** sowie der Durchbruch **40a** und **40b** mit Teflon oder einem äquivalenten Material ausgekleidet werden. Sofern auf den Tauchkernstab **5** bzw. den Tastkörper **7** keine allzu grossen seitlichen Kräfte ausgeübt werden, kann auf die Führungsscheiben **16a** und **16b** zur weiteren Minimierung des Wegaufnehmers **1** bzw. 60 verzichtet werden. Da der Topf bzw. die Teiltöpfe **19a** und **19b** vorzugsweise aus Ferrit hergestellt werden, welcher gesintert und danach schlecht bearbeitbar ist, eröffnet ein Auskleiden mit einer Teflonbeschichtung die Möglichkeit einer passgenauen Nachbearbeitung.

Die oben angeführten Konstruktionsbeispiele weisen zwei Teiltöpfe **21a** und **21b** bzw. **63a** und **63b** mit einer den magnetischen Kreis schliessenden Tauchkernscheibe **43** bzw. einer in zwei Teilscheiben **65a** und **65b** geteilten Scheibe und zwei Erregerspulen **41a** und **41b** auf. Eine Verwendung von zwei Teiltöpfen ergibt eine höhere Messgenauigkeit, da jeweils in einem der magnetischen Kreise der magnetische Widerstand erhöht und in dem anderen Kreis der magnetische Widerstand entsprechend verringert wird. Es kann jedoch auch mit nur lediglich einem einzigen magnetischen Kreis, der nur einen Topf, eine Tauchkernscheibe und eine Erregerspule aufweist, gearbeitet werden. Diese Ausführungsvariante ist preisgünstiger, hat jedoch eine geringere Empfindlichkeit.

**Patentansprüche**

1. Verfahren zur Ermittlung einer Messweglänge ($\pm \Delta$**d),** wobei eine Induktivitätsänderung wenigstens einer ein Magnetfeld erzeugenden Erregerspule **(Er; Er1, Er2; 41a, 41b)** ermittelt wird, das Magnetfeld in einem ferromagnetischen Joch **(J; Tpt1, Tpt2; 19a, 19b; 63a, 63b)** und einem ferromagnetischen Tauchkern **(Tk; Tst, Tsch; 6, 5, 43; 61)** geführt wird, wobei Joch **(J;Tpt1, Tpt2; 19a, 19b; 63a, 63b)** und Tauchkern **(Tk; Tst, Tsch; 6, 5, 43; 61)** relativ zueinander entlang der Messweglänge ($\pm \Delta$**d)** verschoben werden, **dadurch gekennzeichnet, dass** Tauchkern **(Tk; Tst, Tsch; 6, 5, 43; 61)** und Joch **(J; Tpt1, Tpt2; 19a, 19b; 63a, 63b)** lediglich entlang sich nicht ändernden Verschiebeöffnungen **(S1, S2)** verschoben werden und dabei ein über das Joch **(J; Tpt1, Tpt2; 19a, 19b; 63a, 63b)** und dem Tauchkern **(Tk; Tst, Tsch; 6, 5, 43; 61)** geschlossener ferromagnetischer Feldlinienweg **(ℓ, ℓ1, ℓ2; ℓT1, ℓT2)** des Magnetfeldes lediglich durch die sich während der Messung nicht ändernden Verschiebeöffnungen **(S1, S2)** unterbrochen wird, und eine Änderung eines magnetischen Widerstands **(R$_m$)** nur im ferromagnetischen Feldlinienweg **(e, ℓ1, ℓ2; ℓT1, ℓT2)** entsprechend der Messweglänge **($\pm\,\Delta$d)** die Induktivitätsänderung bewirkt.

2. Verfahren nach Anspruch 1, **dadurch gekennzeichnet, dass** das Magnetfeld als zwei Teilmagnetfelder mittels zweier Erregerspulen **(Er1, Er2; 41a, 41b)** erzeugt wird, wobei nur unterbrochen durch die Verschiebeöffnungen **(S1, S2)** ein erster ferromagnetischer Kreis mit einem ersten Teilmagnetfeld durch einen ersten Teil des Jochs und einen ersten Teil des Tauchkerns und ein zweiter ferromagnetischer Kreis mit einem zweiten Teilmagnetfeld durch einen zweiten Teil des Joches und einen zweiten Teil des Tauchkerns aufrecht erhalten bleibt, wobei Änderungen magnetischer Widerstände nur des ersten und zweiten ferromagnetisches Kreises entsprechend der Messweglänge gegensinnige zu- und abnehmende Induktivitätsänderungen der ersten und zweiten Erregerspule **(Er1, Er2; 41a, 41b)** bewirken.

3. Induktiver Wegaufnehmer **(W1, W2, W3, W4; 1; 60)** zur Ermittlung einer Messweglänge **($\pm\,\Delta$d)** gemäss einem Verfahren entsprechend der Ansprüche 1 oder 2 mit wenigstens einer ein Magnetfeld erzeugenden Erregerspule **(Er; Er1, Er2; 41a, 41b)** sowie mit einem ferromagnetischen Joch **(J; Tpt1, Tpt2; 19a, 19b; 63a, 63b)** und einem ferromagnetischen Tauchkern **(Tk; Tst, Tsch; 6, 5, 43; 61)** zur Führung des Magnetfeldes, wobei Joch **(J; Tpt1, Tpt2; 19a, 19b; 63a, 63b)** und Tauchkern **(Tk; Tst, Tsch; 6, 5, 43; 61)** entsprechend der Messweglänge **($\pm\,$Ad)** relativ zueinander verschiebbar ausgebildet sind, **dadurch gekennzeichnet, dass** Tauchkern **(Tk; Tst, Tsch; 6, 5, 43; 61)** und Joch **(J; Tpt1, Tpt2; 19a, 19b; 63a, 63b)**, lediglich unterbrochen durch Verschiebeöffnungen **(S1, S2)**, einen geschlossenen Feldlinienweg **(ℓ, ℓ1, ℓ2; ℓT1, ℓT2)** des Magnetfeldes bilden und eine Änderung eines magnetischen Widerstands **(R$_m$)** nur des ferromagnetischen Feldlinienweges **(ℓ, ℓ1, ℓ2; ℓT1, ℓT2)** durch die Verschiebung eine Induktivitätsänderung der wenigstens einen Erregerspule **(Er; Er1, Er2; 41a, 41b)** bewirkt.

4. Wegaufnehmer **(W2, W3, W4; 1; 60)** nach Anspruch 3, **dadurch gekennzeichnet, dass** das Joch als ein die wenigstens eine Erregerspule **(Er; Er1, Er2; 41a, 41b)** aufnehmender Topf **(Tpt1, Tpt2; 19a, 19b; 63a, 63b)** mit einem Topfboden **(Tb; 39a, 39b)**, einer Topfwand **(Tw)** und einem Topfinnenraum **(47a, 47b)** ausgebildet ist und der Tauchkern einen Tauchkernstab **(Tst; 5)** und eine Tauchkernscheibe **(Tsch; Tscht1, Tscht2; 43; 61)** hat, wobei der Tauchkernstab **(Tst; 5)** durch die wenigstens eine Erregerspule **(Er; Er1, Er2; 41a, 41b)** und mit einer ersten, während der Verschiebung sich nicht ändernden Verschiebeöffnung **(S1)** durch den Topfboden **(Tb; 39a, 39b)** sowie die Taukernscheibe **(Tsch; Tscht1, Tscht2; 43; 61)** im Topfinnenraum **(47a, 47b)** mit einer zweiten, sich ebenfalls während der Verschiebung nicht ändernden Verschiebeöffnung **(S2)** zwischen einem umlaufenden Tauchkernscheibenrand **(55)** und einer Topfinnenwandoberfläche verschiebbar ist.

5. Wegaufnehmer **(W3, W4; 1; 60)** nach Anspruch 4, **dadurch gekennzeichnet, dass** der ferromagnetische Topf aus zwei Teiltöpfen **(Tpt1, Tpt2; 19a, 19b)** besteht, welche durch einen magnetischen Widerstand voneinander getrennt sind, der grösser ist als ein magnetischer Gesamtwiderstand des jeweiligen Magnetkreises, in jedem der Teiltöpfe **(Tpt1, Tpt2; 19a, 19b)** eine Erregerspule **(Er1, Er2; 41a, 41b)** angeordnet ist und die Topfrauminnenoberflächen der Teiltöpfe **(Tpt1, Tpt2; 19a, 19b)** in Verschieberichtung der Tauchkernscheibe **(Tscht1, Tscht2; 43; 61)** miteinander fluchten.

6. Wegaufnehmer **(W4; 60)** nach Anspruch 5, **dadurch gekennzeichnet, dass** die Tauchkernscheibe **(61)** in zwei voneinander distanzierten Tauchkernteilscheiben **(Tscht1, Tscht2; 65a, 65b),** mit vorzugsweise gleicher Aussenkontur, unterteilt ist, der Abstand der Tauchkernteilscheiben **(Tscht1, Tscht2; 65a, 65b)** mit einem magnetisch isolierenden (nicht ferromagnetischen), vorzugsweise zusätzlich elektrisch isolierenden, Material **(Zsch)** gefüllt ist, wobei der magnetische Widerstand im gefüllten Abstand grösser ist als in jeder Tauchkernteilscheibe **(Tscht1, Tscht2; 65a, 65b)** und insbesondere wenigstens so gross ist, wie die grösste Messweglänge **(2 $\Delta$d$_{max}$)**.

7. Wegaufnehmer **(1; 60)** nach einem der Ansprüche 4 bis 6, **dadurch gekennzeichnet, dass** der Tauchkernstab **(5)** an seinem einen Ende einen Tastkörper **(7)** für einen Aufsatz auf einer Objektoberfläche **(9)** hat, deren Oberflächenprofil bestimmt werden soll, und der Tauchkernstab **(5)**, insbesondere an seinem anderen Stabendbereich, mit einer Spiralfeder **(50)** im Wegaufnehmer **(1; 60)** federnd in einer Ruheposition gehalten ist, wobei vorzugsweise der Tauchkernstab **(5)** um diese Ruhelage herum in annähernd gleichen Teilmesswegen **($\pm\,\Delta$d)** auslenkbar ist.

8. Wegaufnehmer **(1; 60)** nach Anspruch 4, **dadurch gekennzeichnet, dass** die Teiltöpfe **(19a, 19b)** bis auf Fertigungstoleranzen gleich ausgebildet, aber spiegelbildlich zueinander montiert sind.

9. Wegaufnehmer **(1; 60)** nach einem der Ansprüche 4 bis 8, **dadurch gekennzeichnet, dass** die wenigstens eine Erregerspule **(41a, 41b)** im Topfinnenraum **(47a, 47b)** benachbart zum Topfboden **(39a, 39b)** angeordnet ist, und der Topf **(19a, 19b)** eine Aussenausnehmung **(53b, 53d)** in einer Topfaussenwand **(17a, 17b)** aufweist, in der elektrische Leiter **(30a, 30b)** für die wenigstens eine Erregerspule **(41a, 41b),** insbesondere bündig mit der Aussenkontur, in der Topfaussenwand **(17a, 17b)** einlegbar sind und vorzugsweise über den Topf **(19a, 19b)** eine Schutzhülse **(13)** schiebbar ist.

10. Wegaufnehmer **(1; 60)** nach einem der Ansprüche 4 bis 9, **gekennzeichnet durch** eine ausserhalb des Topfbodens **(39a, 39b)** angeordnete Führungsscheibe (16a, **16b)** mit einem Führungsdurchbruch **(37a, 37b)** für den Tauchkernstab **(5),** wobei wenigstens die Durchbruchwandung aus einem gute Gleiteigenschaften aufweisenden Material, insbesondere Teflon besteht.

Fig. 1

G    M

Tk    Al    Zw    Al    S2

S2    Rj    ±Δd    Er    Rj

lj    Dp    lj

l1    Jf    Iz    Fli    Jf    l2

Fli

J    S1

W1

Fig. 2

Tk    Tö

Tsch    S2

S2    Tw    Tw

Tst    Tp

Tw    Er    l    Tw

Tb

S1    Db

±Δd

Fig. 3

Fig. 4

Fig. 5

Fig. 6

Fig. 7

Fig. 8

Fig. 9

Fig. 10

**Europäisches**
**Patentamt**

**EUROPÄISCHER RECHERCHENBERICHT**

Nummer der Anmeldung

EP 05 40 5051

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | FR 2 688 586 A (JAEGER) 17. September 1993 (1993-09-17) * Seite 1, Zeile 1 - Zeile 6 * * Seite 8, Zeile 26 - Seite 9, Zeile 2 * * Seite 10, Zeile 8 - Seite 11, Zeile 3 * * Seite 13, Zeile 12 - Zeile 23 * * Abbildungen 3,3A,5 * ----- | 1,3 | G01D5/20 G01B7/34 |
| Y | US 2004/092349 A1 (IWAMOTO KENICHI ET AL) 13. Mai 2004 (2004-05-13) * Absatz [0032] * ----- | 1,3 | |

**RECHERCHIERTE SACHGEBIETE (Int.Cl.7)**

G01D
G01B

Der vorliegende Recherchenbericht wurde für alle Patentansprüche erstellt

| Recherchenort | Abschlußdatum der Recherche | Prüfer |
|---|---|---|
| Den Haag | 12. Juli 2005 | Keita, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 40 5051

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2005

| Im Recherchenbericht angeführtes Patentdokument | Datum der Veröffentlichung | Mitglied(er) der Patentfamilie | Datum der Veröffentlichung |
|---|---|---|---|
| FR 2688586 A | 17-09-1993 | FR 2688586 A1 | 17-09-1993 |
| US 2004092349 A1 | 13-05-2004 | JP 2001174205 A<br>JP 2001254791 A<br>JP 2001289291 A<br>DE 10049505 A1<br>US 6666784 B1 | 29-06-2001<br>21-09-2001<br>19-10-2001<br>03-05-2001<br>23-12-2003 |

EPO FORM P0461

Für nähere Einzelheiten zu diesem Anhang : siehe Amtsblatt des Europäischen Patentamts, Nr.12/82